# EUROPÄISCHE PATENTSCHRIFT

(11) **EP 1 297 306 B1**
(45) Veröffentlichungstag und Bekanntmachung des Hinweises auf die Patenterteilung: **21.01.2004**
(21) Anmeldenummer: 01957700.6
(22) Anmeldetag: 29.06.2001
(51) Int. Cl.: G01B 5/00, G01B 5/28, G01B 5/207, G01B 21/20

(54) **VORRICHTUNG ZUR MOMENTENFREIEN LAGERUNG UND FORMERFASSUNG UMGEFORMTER PLATTEN**
DEVICE FOR MOMENTLESS STORAGE AND DETECTION OF THE SHAPE OF FORMED PANELS
DISPOSITIF DE STOCKAGE SANS MOMENT ET DE DETECTION DE FORME DE PANNEAUX NON FORMES

(30) Priorität: 03.07.2000 DE 10032298
(43) Veröffentlichungstag der Anmeldung: 02.04.2003
(73) Patentinhaber: Ostseestaal GmbH, 18439 Stralsund (DE)
(72) Erfinder: GRIGO, Manfred, 18119 Rostock-Warnemünde (DE); WIEBECK, Erno, 18069 Rostock (DE)
(74) Vertreter: Rother, Bernhard, Dr.-Ing.
(86) Internationale Anmeldenummer: PCT/DE2001/002409
(87) Internationale Veröffentlichungsnummer: WO 2002/003023

(56) Entgegenhaltungen:
- US-A- 3 364 728
- PATENT ABSTRACTS OF JAPAN vol. 1999, no. 12, 29. Oktober 1999 (1999-10-29) & JP 11 201748 A (TOSHIBA CERAMICS CO LTD), 30. Juli 1999 (1999-07-30)
- PATENT ABSTRACTS OF JAPAN vol. 012, no. 019 (P-657), 21. Januar 1988 (1988-01-21) & JP 62 174602 A (NIPPON KOKAN KK), 31. Juli 1987 (1987-07-31)
- PATENT ABSTRACTS OF JAPAN vol. 2000, no. 08, 6. Oktober 2000 (2000-10-06) & JP 2000 131047 A (NKK CORP), 12. Mai 2000 (2000-05-12)

## Beschreibung

Die Erfindung betrifft eine Vorrichtung zur momentenfreien Lagerung und Formerfassung umgeformter Platten.

Es ist bekannt, dass die Formkontrolle umgeformter Platten großer Abmessungen (bis zu 4 m x 20 m), z B. Platten der Schiffsaußenhaut, i.d.R. mittels aufgesetzter Schablonen, visueller Kontrolle und subjektiven Bewertung, in Einzelfällen aber auch bereits durch berührungslose 3D-Meßtechnik, erfolgt. Unabhängig von der Messmethode wird die Platte dabei bei unterschiedlichen Lagerungsbedingungen (z.B. am Kran hängend oder auf dem Boden liegend mit partieller Randabstützung) vermessen Die dabei infolge der Eigenmasse der Platte auftretenden Biegedeformationen können, je nach gewählten Lagerungsbedingungen, recht unterschiedliche Ergebnisse liefern, die die tatsächlich durch den Umformvorgang erreichte Plattenform deutlich verfälschen können. Infolge dieser unterschiedlichen Randbedingungen ist eine exakte Reproduzierbarkeit der Ergebnisse nicht gegeben.

In JP-A-11201748 werden zur Formkontrolle mittels Lasersensor die geformten Platten auf pneumatischen, auf einer Arbeitsplatte montierten Stempeln gelagert.

Der im Patentanspruch 1 angegebenen Erfindung liegt die Aufgabe zugrunde, eine Vorrichtung zur momentenfreien Lagerung und gleichzeitigen Formerfassung zu schaffen, um die tatsächliche durch den Umformvorgang erreichte reale Plattenform zu erfassen.

Dieses Problem wird durch die Vorrichtung mit den Merkmalen des Patentanspruches 1 gelöst, die durch die abhängigen Ansprüche präzisiert und ergänzt sind.

Die Vorrichtung enthält unter anderem ein Feld von hydraulisch oder pneumatisch betätigten Stempeln, die miteinander so gekoppelt sind,
o dass beim Auflegen der Platte auf das Stempelfeld ein Druckausgleich zwischen den Stempeln erfolgt, wodurch die Platte gleichmäßig momentenfrei gelagert wird,
o dass die Stempel auf einer Unterkonstruktion(z.B. Trägerrost) befestigt sind,.
o dass je nach Größe und Umformgrad der Platte eine optimale Einstellung der Stempelabstände vorgenommen wird,
o dass zur Optimierung der Ausfahrlänge der Stempel diese in Gruppen zusammengefasst sind, die auf modular aufgebauten Unterkonstruktionen befestigt werden.

Die Lage dieser Gruppen ist in horizontaler und vertikaler Richtung einstellbar. Nach einem weiteren Merkmal der Erfindung erfolgt die Formerfassung mittels Sensoren, die i.d.R. in die Stützstempel integriert sind. In Sonderfällen (z.B. kleine Platte mit geringer Anzahl von Stützstellen) kann die Formerfassung auch durch eine unabhängige Messtechnik vorgenommen werden.

Die an diskreten Punkten der Platte erfassten Koordinaten (x, y, z) werden über ein spezielles Computerprogramm mit den Sollwerten aus dem CAD-System verglichen. Aufgetretene Abweichungen werden z.B. auf dem Bildschirm visualisiert.

Die mit der Erfindung erzielten Vorteile bestehen insbesondere darin, dass die vorgeschlagene Vorrichtung eine momentenfreie Lagerung gestattet. Damit werden die aus der Eigenmasse der Platte resultierenden Biegedeformationen eliminiert, so dass eine objektive Erfassung der Form gewährleistet ist.

Die Erfindung wird anhand von Ausführungsbeispielen näher erläutert. Es zeigen:
Figur 1: Prinzipielle Anordnung der Stempel
Figur 2: Detail der prinzipiellen Anordnung gemäß Fig. 1
Figur 3:Variabler Stempelabstand (Maximalstellung)
Figur 4:Variabler Stempelabstand (Minimalstellung)
Figur 5: Veränderung der Stempelabstände in einer Dimension (Maximalabstand)
Figur 6:Veränderung der Stempelabstände in einer Dimension (Minimalabstand)
Figur 7: Positionierung der Sensoren
Figur 8: Modulare Zusammensetzung der Elemente zu einen Messtisch
Figur 9: Modulare Zusammensetzung der Elemente zu einen Messtisch
Figur 10: Koordinatensysteme

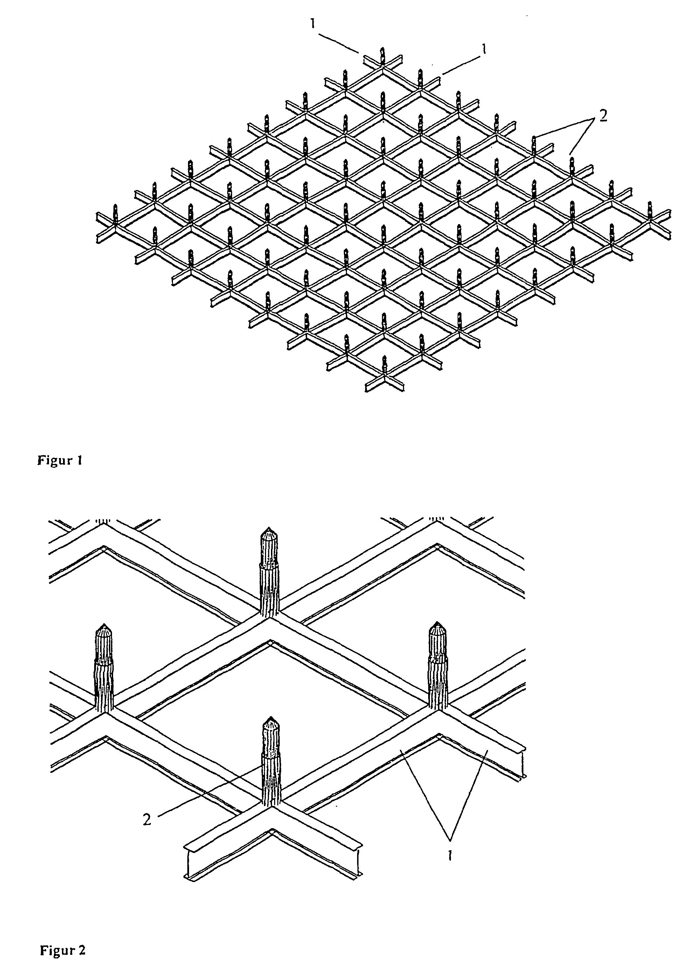

Nach Figuren 1 und 2 besteht die Vorrichtung zur momentenfreien Lagerung und Formerfassung aus einer Trägerkonstruktion 1, auf der hydraulisch oder pneumatisch vertikal ausfahrbare Stempel 2 angeordnet sind, so dass beim Auflegen der Platten auf das Stempelfeld ein Druckausgleich zwischen den Stempeln erfolgt.

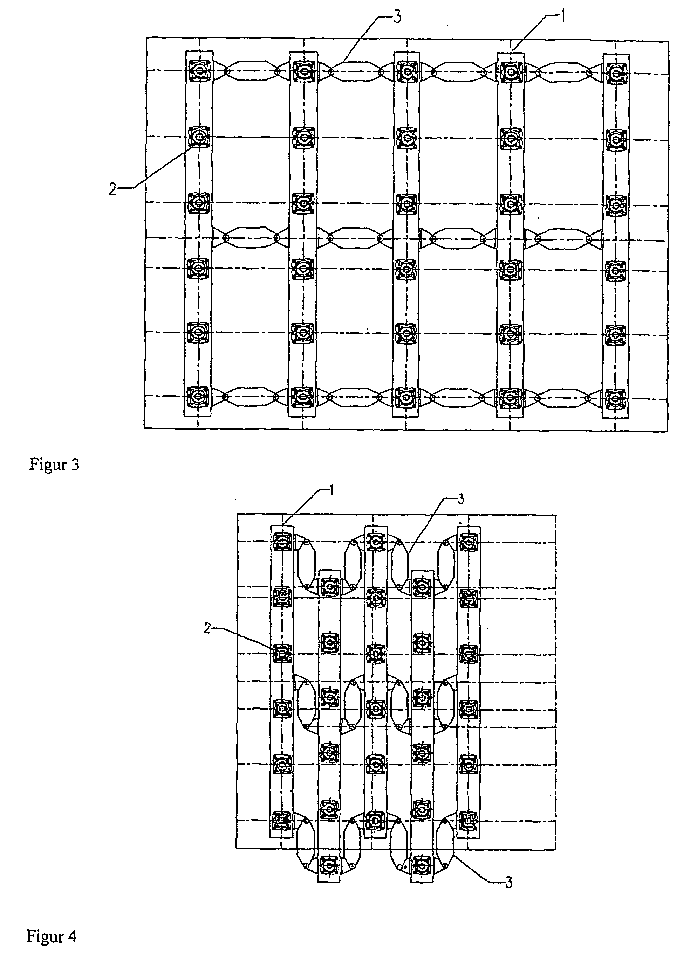

Nach den Figuren 3 und 4 sind die Stempel 2 zu Gruppen zusammengefasst und auf einer modular gestalteten Unterkonstruktion befestigt und durch Gelenke 3 in X- und Y-Richtung verschiebbar, so dass je nach Größe und Umformgrad der Platte eine optimale Einstetlung der Stempelabstände möglich ist.

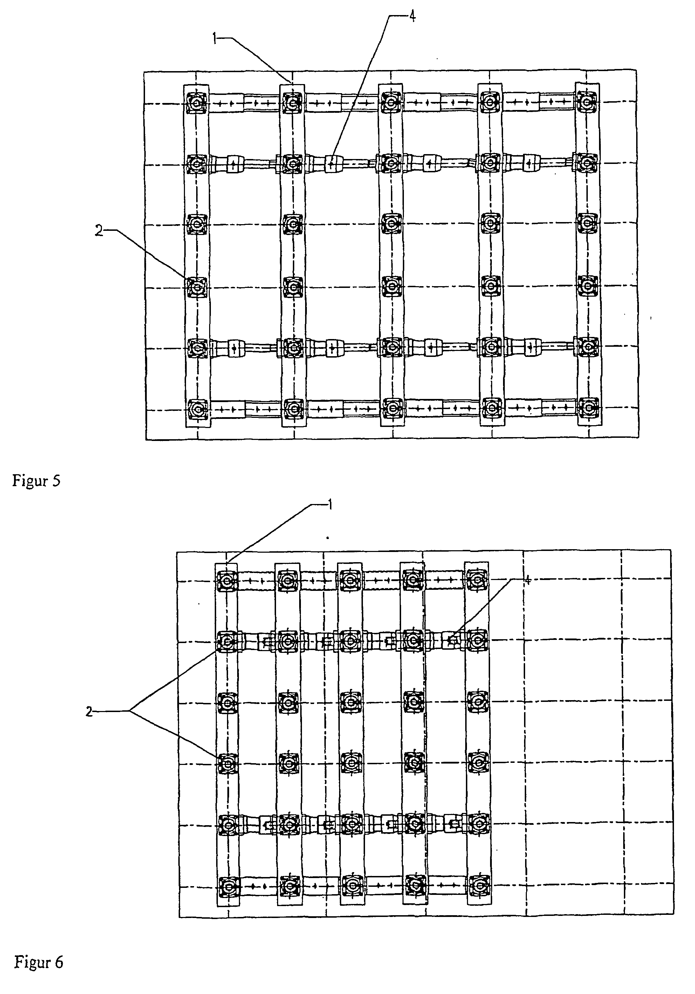

In den Figuren 5 und 6 sind die möglichen Veränderungen der Stempelabstände auf der Unterkonstruktion im Maximal- bzw. im Mimimalabstand dargestellt.

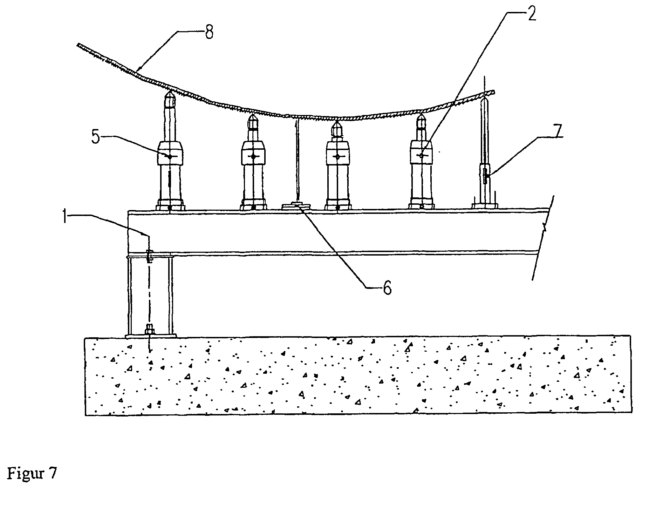

In Figur 7 werden Möglichkeiten der Messwerterfassung bei momentenfreier Lagerung der Platte 8 dargestellt. Die Formerfassung erfolgt dabei entweder durch in die Stempel 2 integrierte Sensoren 5, oder durch den Einsatz berührungsloser Sensoren 6 oder durch mechanische Kontaktsensoren 7. Der mobile Einsatz der Sensoren 6 und/oder 7 ohne eine feste Verbindung mit der Trägerkonstruktion 1 gestattet die Erfassung ausgezeichneter zusätzlicher Punkte (z.B. am Plattenrand oder an gewünschten Prüfpunkten).

Die Formerfassung kann auch durch auf der Gegenseite der Platte 8 angeordnete geeignete Messtechnik erfolgen.

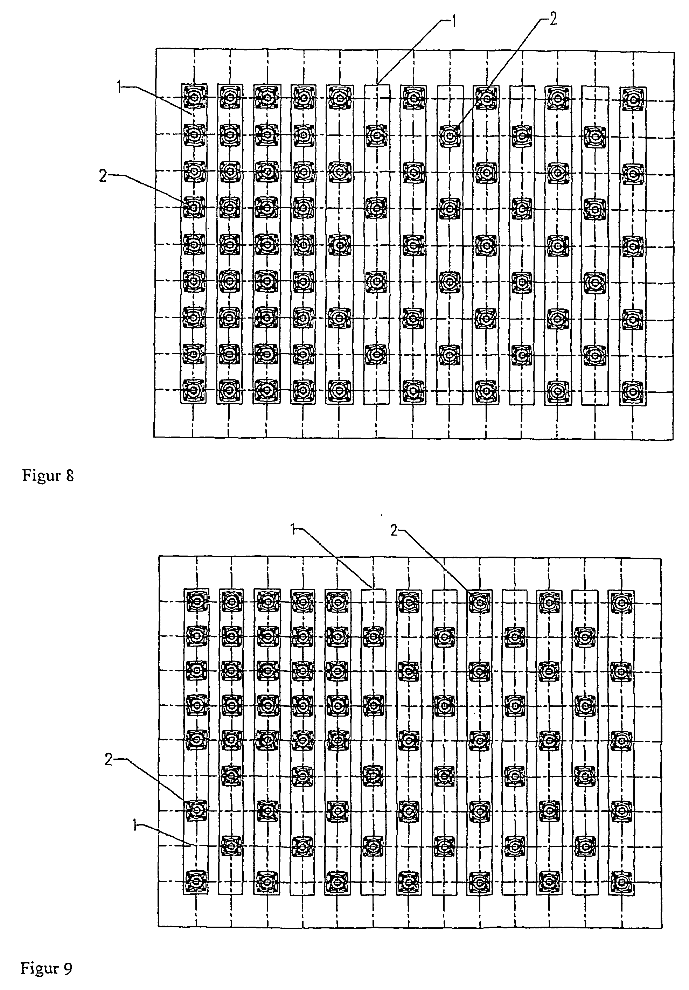

In den Figuren 8 und 9 wird die modulare Zusammensetzung der Elemente 1,2,3 und 4 zu einem Messtisch dargestellt.

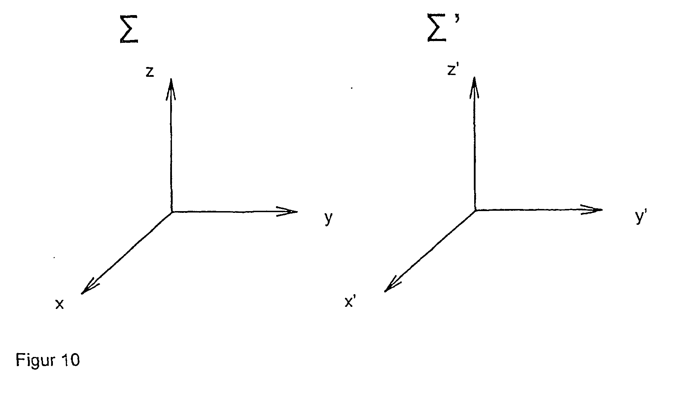

In der Figur 10 sind die Bezugskoordinatensysteme Σ und Σ' dargestellt, um die an diskreten Punkten der Platte 8 erfassten Messwerte über ein spezielles Computerprogramm mit den Sollwerten aus dem CAD-System zu vergleichen. Aufgetretene Abweichungen werden z.B. auf dem Bildschirm visualisiert.

Die Erfassung der Messwerte an der Platte (Ist-Zustand) erfolgt im Koordinatensystem Σ. Zu diesem Zweck wird die Platte gegen Fixpunkte ausgerichtet.

Die Vergleichswerte des durch die Konstruktion vorgegebenen Sollzustandes sind im Koordinatensystem Σ' gegeben.

Für den Ist-Soll-Vergleich sind die erforderlichen mathematischen Manipulationen (Rotation, Translation von Σ gegenüber von Σ') vorzunehmen.

In der Regel wird die diskrete Verteilung der Messwerte i mit den Messwerten (Xi, Yi, Zi) nicht mit den Stützstellen der CAD-Zeichnung i' (Xi',Yi', Zi') übereinstimmen. Die erforderliche Umrechnung wird durch Interpolation auf die Stützpunkte durch geeignete mathematische Algorithmen, wie z.B. durch Sptine Approximationen, vorgenommen.

Der Ist-Soll-Vergleich erfolgt durch eine geeignete Darstellung. Das kann z.B. in Form von Tabellen, graphischen Darstellungen Markierungen auf der Platte u.a. erfolgen.

Um die notwendige Genauigkeit für die Interpolation zu erreichen, kann es erforderlich sein, die Anzahl der Messstellen pro Flächeneinheit im System Σ zu erhöhen. Zu diesem Zweck werden die Abstände der Messstempel (x, y in Σ) verringert.

### Bezugszeichenliste

- 1.: Trägerkonstruktion
- 2.: Stempel
- 3.: Gelenk
- 4.: Vorrichtung zur Verschiebung der Trägerkonstruktion
- 5.: Stempel mit integriertem Sensor
- 6.: Berührungsloser Sensor
- 7.: Mechanischer Kontaktsensor
- 8.: Platte

## Patentansprüche

1. Vorrichtung zur momentenfreien Lagerung und Formerfassung umgeformter Platten (8) mittels Stempeln (2) und Sensoren (5) mit
- einem Feld von hydraulisch oder pneumatisch betätigten Stempeln (2), das auf einer Trägerkonstruktion (1) befestigt ist,
- Gelenken (3) und einer Verschiebevorrichtung,
- Sensoren (5) und/oder mechanischen Abstandmessern zur Formerfassung, wobei
- die Stempel (2) miteinander derart gekoppelt sind, dass beim Auflegen der Platte (8) auf das Stempelfeld ein Druckausgleich zwischen den Stempeln (2) erfolgt,
- die Stempel (2) hydraulisch oder pneumatisch vertikal ausfahrbar sind,
- je nach Größe und Umformgrad der Platte (8) die Stempel (2) in modular auf gebauter Unterkonstruktion in Gruppen zusammengefasst sind, so dass die Stempelabstände durch die Gelenke (3) und die Verschiebevorrichtung auf der Trägerkonstruktion (1) einstellbar sind.

2. Vorrichtung nach Anspruch 1, **dadurch gekennzeichnet, dass** die Lage der Gruppen in horizontaler und vertikaler Richtung einstellbar ist.

3. Vorrichtung nach Anspruch 1, **dadurch gekennzeichnet, dass** die Sensoren (5) in die Stempel (2) integriert sind.

4. Vorrichtung nach Anspruch 1, **dadurch gekennzeichnet, dass** berührungslose Sensoren (6) auf der Trägerkonstruktion (1) angeordnet sind.

5. Vorrichtung nach Anspruch 1, **dadurch gekennzeichnet, dass** taktile Sensoren (7) auf der Trägerkonstruktion (1) angeordnet sind.

6. Vorrichtung nach Anspruch 1 bis 5, **dadurch gekennzeichnet, dass** zur Erfassung der Messwerte an der Platte (8) ein Bezugssystem auf der Trägerkonstruktion (1) vorhanden ist.

## Claims

1. Assembly for torque-free bearing and form analysis of unshaped plates (8) by means of supports (2) and sensors (5) with
- a field of hydraulically or pneumatically powered supports (2) which is fixed to a support structure (1),
- articulations (3) and a telescopic assembly,
- sensors (5) and/or mechanical distance sensors for form analysis, the supports (2) being linked with each other in such a manner that, when the plate (8) is rested on the field of supports, a pressure compensation between the supports (2) results,
- the supports (2) are hydraulically or pneumatically extendible in a vertical direction,
- depending on the size and degree of deformation of the plate (8) the supports (2) are grouped on a modular substructure in such a manner that the support interstices are adjustable by the articulations (3) and the telescopic assembly on the support structure (1).

2. Assembly according to claim 1, **characterized in that** the position of the groups can be adjusted in the horizontal and the vertical.

3. Assembly according to claim 1, **characterized in that** the sensors (5) are integrated into the supports (2).

4. Assembly according to claim 1, **characterized in that** non-contact sensors (6) are arranged on the support structure (1).

5. Assembly according to claim 1, **characterized in that** tactile sensors (7) are arranged on the support structure (1).

6. Assembly according to claims 1 to 5, **characterized in that** a reference system is located on the support structure for recording the measurement values of the plate (8).

## Revendications

1. Assemblage pour la suspension exempte de couple et l'analyse des formes de plaquesdéformées (8) au moyen d'étançons (2) et de capteurs (5) avec
- une surface d'étançons (2) à actionnement hydraulique ou pneumatique, fixée sur une structure porteuse (1),
- des articulations (3) et un dispositif de déplacement,
- des capteurs (5) et/ou des capteurs de distance mécaniques pour l'analyse des formes,
les étançons (2) étant accouplés de manière à obtenir une compensation de la pression entre les étançons (2) lorsque la plaque (8) est déposée sur la surface d'étançons,
- les étançons (2) sont extensibles à la verticale par action hydraulique ou pneumatique,
- selon les dimensions et le degré de déformation de la plaque (8), les étançons (2) sont regroupés sur une substructure modulaire de sorte que les intervalles entre les étançons sont réglables par l'intermédiaire des articulations (3) et du dispositif de déplacement prévu sur la surface porteuse (1).

2. Assemblage conforme à la revendication 1, **se caractérisant par** lespossibilités de
réglage horizontal et vertical de la position des groupes.

3. Assemblage conforme à la revendication 1, **se caractérisant par** l'intégration des capteurs (5) dans les étançons (2).

4. Assemblage conforme à la revendication 1, **se caractérisant par** la disposition de capteurs sans contact (6) sur la structure porteuse (1).

5. Assemblage conforme à la revendication 1, **se caractérisant par** la disposition de capteurs tactiles (7) sur la surface porteuse (1).

6. Assemblage conforme à la revendication 1 à 5, **se caractérisant par** l'installation d'un système de référence sur la structure porteuse, pour l'enregistrement des valeurs mesurées sur la plaque (8).
